# EUROPEAN PATENT APPLICATION

(11) **EP 4 793 616 A1**
(43) Date of publication of application: **19.08.2026**
(21) Application number: 25157422.4
(22) Date of filing: 12.02.2025
(51) Int. Cl.: G01M 5/00, G01N 27/83, E01D 19/10

(54) **MOVABLE INSPECTION DEVICE FOR OPERATION ALONG A WIRE ROPE**

(71) Applicant: Bridon International Limited, Doncaster South Yorkshire DN4 5JQ (GB)
(72) Inventor: CARRÉ, Guillaume, 69210 Bully (FR); ALLO, Baptiste, 69210 Bully (FR)
(74) Representative: Serwas, Harry

(57) **Abstract**

The present disclosure pertains to a movable inspection device (10) for operation along a wire rope (1), the movable inspection device comprising a chassis (100), at least one pair of drivable wheels (111, 113; 121, 123), and at least one motor (130) configured to actuate a main wheel (111; 121) of each pair. Each pair includes a main wheel (111; 121) engaging a first lateral surface of the wire rope (1) and a secondary wheel (113; 123) engaging a second lateral surface. A transmission arm (110; 120) of the movable inspection device connects each main wheel to the corresponding secondary wheel, transmitting torque to drive the secondary wheel. The device comprises a tensioner module (140) configured to apply an adjustable force to the transmission arm and maintain direct contact between the wheels and the wire rope. rope for reliable operation.

## Description

### Technical field

The present disclosure relates to a movable inspection device for operation along a wire rope. The present disclosure also pertains to a Magnetic Rope Testing, MRT, system comprising a movable inspection device and an MRT unit.

### Background

Wire ropes are integral components in various applications, including bridges, tensioner cables, ropeways, and mining operations. Ensuring their structural integrity is crucial for the safety and reliability of these infrastructures, as effective wire rope inspection is crucial to maintain safety. Traditional manual inspections can pose risks to inspectors, be time-consuming, and may lead to operational downtime, causing traffic disruptions or production losses.

In this context, wire rope inspection devices have been developed and are widely used to assess the condition of cables across diverse installations. These devices primarily employ visual inspection methods, such as camera systems, or magnetic techniques. Specifically, Magnetic Rope Testing (MRT) utilizes Magnetic Flux Leakage (MFL) to detect internal flaws within conducting wire ropes, identifying issues like loss of metallic area or wire breaks that may not be visible externally.

There is therefore a need for portable MRT devices that can operate along various types of cables, ensuring safety and quality while facilitating easier access and allowing for a potentially significant distance between the device and the operator.

For instance, a method of measuring the cross-sectional area of magnetic reinforcing members in power transmission conductors is described in US Appl. No. 08/939,718. Therein, a corresponding apparatus for detecting a loss of cross-sectional area of steel strength members in steel wire reinforced aluminum conductors is described. Such an apparatus can host a MRT device and comprises a tug component with a drive motor for moving along a wire rope. It further comprises a baseplate for mounting electronical components, a detector with a housing, guide wheels with tensioners to maintain alignment with the conductor, and antennas for signal transmission.

However, this apparatus is unsuitable for inclined cables or surfaces with limited friction, as it is impractical to move a heavy device along such conductors without significant slippage or loss of traction. Additionally, it is unable to absorb vibrations or oscillations during movement, as there is no damping mechanism to mitigate the effects of dynamic forces.

Another device is described in the US patent application Pub. No. US 2021/0382009 A1, for evaluating damage to a magnetic linear body. The disclosed device comprises a moving mechanism with rotatable support rollers attached to the end portions of a portable damage detection device at equal angle intervals. This ensures proper alignment of the wire rope within an internal space of the device, where magnetic measurements can be carried out.

However, the fixed arrangement of the support rollers and the lack of adaptive adjustment mechanisms prevent the device from maintaining a consistent alignment when navigating cables, especially if inclined or irregular, as sufficient traction cannot be obtained on ropes with reduced friction.

Known solutions for wire rope inspection devices thus present significant limitations. These devices typically do not provide the capability for remote operation by the inspector, which compromises safety and convenience during the inspection process. Furthermore, such MRT inspection devices lack mechanisms to facilitate smooth and efficient movement along wire cables with complex geometries or challenging environmental conditions, making the inspection process cumbersome, less reliable, and sometimes impossible.

### Summary

To address this or these drawbacks, it is proposed according to a first aspect of the present disclosure a movable inspection device for operation along a wire rope, comprising:
- a chassis,
- at least one pair of drivable wheels connected to the chassis, each pair of drivable wheels including
   ∘ a first drivable wheel, called main wheel, adapted to be in cooperative engagement with a first lateral surface of the wire rope, and
   ∘ a second drivable wheel, called secondary wheel, adapted to be in cooperative engagement with a second lateral surface of the wire rope which is distinct and opposite to the first lateral surface,
      the movable inspection device further comprising
      - at least one motor configured to actuate the main wheel of each pair of drivable wheels,
      - at least one transmission arm connecting each main wheel of each pair of drivable wheels to a respective secondary wheel of said pair of drivable wheels, the transmission arm being configured to transmit torque driving the respective secondary wheel in response to the actuation of the main wheel, and
      - a tensioner module attached to each secondary wheel, the tensioner module being configured to apply an adjustable force to the at least one transmission arm, the applied adjustable force being adapted so that the cooperative engagement of the main wheel with the first lateral surface of the wire rope is a direct contact and so that the cooperative engagement of the secondary wheel with the second lateral surface of the wire rope is a direct contact.

In a preferred embodiment, the adjustable force, when applied to the at least one transmission arm, is adapted to: lead the transmission arm to pull the secondary wheel of each pair of drivable wheels toward the main wheel which is respective of said pair of drivable wheels, and/or generate a pressure of the main wheel and of the secondary wheel of each pair of drivable wheels onto the wire rope, the pressure force being balanced by a counterforce exerted by the wire rope, the pressure being optionally adjustable by varying the stiffness of the tensioner module.

In a further preferred embodiment, the pair of drivable wheels consists of two pairs of drivable wheels which are arranged longitudinally along the direction of the wire rope, each pair being configured such that each main wheel and the secondary wheel respective of said main wheel are adapted to be in cooperative engagement with the wire rope.

In a further preferred embodiment, the at least one transmission arm comprises a transmission chain connecting the main wheel to the secondary wheel respective of said main wheel, said transmission chain including at least one element selected among a sprocket, a chain arrangement, a gear, or a belt.

In a further preferred embodiment, the transmission chain comprises an even number of gears, called transmission gear set, the actuation of the main wheel by the at least one motor driving the transmission gear set, the transmission gear set being configured to transmit torque from the main wheel to the secondary wheel respective of said main wheel.

In a possible embodiment, the transmitted torque is the torque transmitted by the transmission arm, said torque driving the respective secondary wheel in response to the actuation of the main wheel.

In a further preferred embodiment, the transmission chain comprises a two-stage reduction gear train, the two-stage reduction gear train including a belt and/or an odd number of gears, the two-stage reduction gear train being arranged such that the actuation of the main wheel by the at least one motor transmits a reduced rotational speed through the two-stage reduction gear train.

In a further preferred embodiment, the main wheel and/or the secondary wheel of the pair of drivable wheels has or have a diameter comprised between 80 mm and 120 mm, said diameter being preferably equal to 90 mm, and/or the secondary wheel of the pair of drivable wheels has a circumference which includes a respective groove, said respective groove having a shaped angle larger than 90° and smaller than 120°.

In a further preferred embodiment, the tensioner module comprises one or more springs configured to apply the adjustable force.

In a further preferred embodiment, the one or more springs of the tensioner module comprise a threaded rod, the tensioner module being configured to adjust the stiffness of the one or more springs by a tightening or a loosening of the threaded rod, the adjustment of the stiffness varying the magnitude of the adjustable force applicable by the tensioner module to the at least one transmission arm.

In a further preferred embodiment, the tensioner module further comprises a dimensioning system configured to vary the magnitude of the adjustable force applicable by the tensioner module to the at least one transmission arm, the dimensioning system comprising an interface configured to input the magnitude of the adjustable force, the interface being selected among: a digital switch inputting the magnitude of the adjustable force depending on a diameter of the wire rope, the diameter of the wire rope being optionally selected among 18 mm, 30 mm, 45 mm or 58 mm, or an analog scale inputting the magnitude of the adjustable force as a continuous function of the rigidity of the one or more springs.

In a further preferred embodiment, the main wheel and the secondary wheel of each pair of drivable wheels are each adapted to turn in a respective rotation plane, the rotation plane of the secondary wheel being pivotally movable relative to the rotation plane of the main wheel by means of a pivotal articulation or joint to adapt to oblique irregularities of the wire rope, said pivotal articulation being configured to exert a pressure from the secondary wheel onto the wire rope when in cooperative engagement for adapting the position of the secondary wheel to said oblique irregularities.

In a further preferred embodiment, the pivotal articulation is further configured to compensate a misalignment between the rotation plane of the main wheel and the rotation plane of the secondary wheel, the pivotal articulation being pivotally connected to the chassis, to the respective secondary wheel, and/or to the at least one transmission arm, thereby enabling an even distribution of the exerted pressure.

In a further preferred embodiment, the movable inspection device further comprises an emitter/receiver system housed within the chassis, the emitter/receiver system being configured to transmit and receive electromagnetic control signals for remotely controlling the at least one motor.

According to another aspect of the disclosure, it is proposed a Magnetic Rope Testing, MRT, system comprising: the movable inspection device according to any of the preceding embodiments, an MRT unit adapted to be connected to the movable inspection device, the MRT unit comprising a plurality of anchor points and a magnet configured to generate a magnetic force for steadily maintaining the unit system on the wire rope, and at least one adjustable rod configured to connect the MRT unit to the movable inspection device, the at least one adjustable rod and/or the plurality of anchor points being adapted for securing the movement of the MRT unit along the wire rope relative to the movable inspection device when the MRT unit is connected to the movable inspection device with the at least one adjustable rod and/or the plurality of anchor points.

In a preferred embodiment, the MRT unit is connected to the movable inspection device with the at least one adjustable rod and/or with the plurality of anchor points.

### Brief description of the drawings

Other features, embodiments, definitions and advantages will become apparent upon reading the detailed description below and analyzing the attached drawings, including the following figures.
Figure 1 represents a schematic view of a movable inspection device for operation along a wire rope according to an embodiment of the invention.
Figure 2 represents a schematic view of a movable inspection device for operation along a wire rope according to another embodiment of the invention.
Figure 3 represents a side view of a movable inspection device for operation along a wire rope according to another embodiment of the invention.
Figure 4 represents a perspective view of a movable inspection device for operation along a wire rope according to another embodiment of the invention.
Figure 5 represents a side view of a movable inspection device for operation along a wire rope according to another embodiment of the invention.
Figure 6 represents a schematic view of transmission chains for a movable inspection device according to an embodiment of the invention.
Figure 7 represents a perspective view of a movable inspection device for operation along a wire rope according to another embodiment of the invention.
Figure 8 represents a tensioner module for a movable inspection device according to an embodiment of the invention.
Figure 9 represents a tensioner module for a movable inspection device according to another embodiment of the invention.
Figure 10 represents a Magnetic Rope Testing system according to an embodiment of the invention.

Unless otherwise indicated, common or analogous elements in the figures are denoted by the same reference numerals and exhibit identical or analogous features, so that common or analogous elements are generally not described again for the sake of clarity and conciseness.

### Description of the embodiments

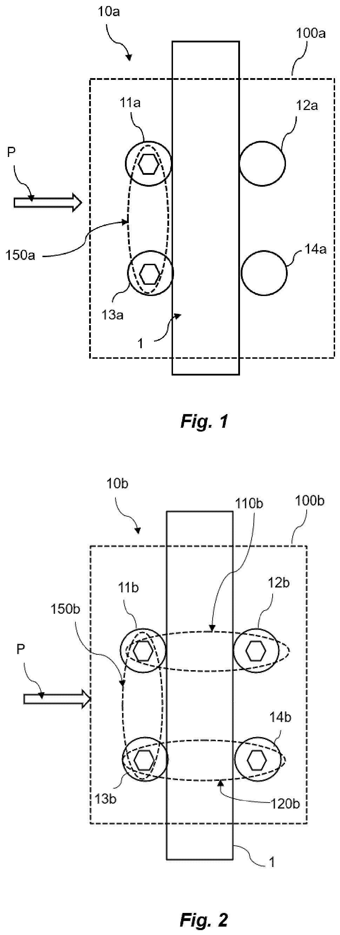

Figure 1 illustrates a movable inspection device for operation along a wire rope according to an embodiment of the invention.

Specifically, a movable inspection device 10a is illustrated for operation along a wire rope 1, comprising a chassis 100a, a pair of driving wheels 11a and 13a and a pair of free wheels 12a and 14a, the wheels 11a-14a being comprised on or in the chassis 100a.

In this embodiment, all wheels 11a-14a are adapted to be in cooperative engagement with the wire rope 1. In particular, both driving wheels 11a and 13a are adapted to be in cooperative engagement with a first lateral surface of the wire rope 1, preferably the same lateral surface. Assuming a cylindrical wire rope 1, this lateral surface corresponds to the left side of the rectangle representing the wire rope 1, and both driving wheels 11a and 13a can cooperate or engage with the same lateral surface of the wire rope 1.

In this embodiment, the movable inspection device 10a further comprises two free wheels 12a and 14a which are adapted to be in cooperative engagement with a second lateral surface of the wire rope 1, preferably opposite to the lateral surface with which the driving wheels 11a and 13a cooperate. Both free wheels 12a and 14a can cooperate or engage with the second lateral surface of the wire rope 1, corresponding to the right side of the rectangle representing the wire rope 1.

In this embodiment, the chassis 100a of the movable inspection device 10a further comprises at least one motor (not represented) configured to actuate the main wheels 11a and 13a defining the sole driving wheels of the movable inspection device 10a.

In this embodiment, the main wheels 11a and 13a are connected to each other by at least one transmission element 150a, said transmission element being for instance a chain or a gear set, so that the actuation of the wheel 11a by the at least one motor enables the actuation of the other driving wheel 13a, transmitting the rotation motion of the first wheel 11a to the other wheel 13a.

In this embodiment, the at least one motor rotates at least one of the two wheels 11a or 13a, with the rotational movement of this at least one wheel being transmitted via the transmission element 150a to the other wheel which is located on the same lateral surface of the wire rope 1. This allows the translational movement of the chassis 100a, and thus of the entire movable inspection device 10a, along the wire rope 1. The free wheels 12a and 14a follow in this movement by rotating similarly to the driving wheels 11a and 13a which are actuated by the at least one motor. This, in turn, ensures a stable balance of the movable inspection device 10a along the wire rope 1 through direct contact.

In this embodiment, an unrepresented element applies a pressure "P" from the chassis 100a onto the wire rope 1 via the wheels. This pressure "P" ensures that the wire rope 1 remains in direct contact between the wheels 11a and 12a as well as between the wheels 13a and 14a. This direct contact depends on various adjustable parameters such as the total mass of the movable inspection device and the features of the wire rope 1, including its angle relative to the vertical, and thus, to the direction of gravitational force. Other relevant features of the wire rope 1 include its materials, defining its adhesion or friction coefficient. The value of the pressure "P" can however be adjusted according to these parameters, while allowing the wheels to rotate while staying in contact with the wire rope 1, and thereby moving the chassis 100a along the wire rope 1.

This provides a movable inspection device 10a comprising two driving wheels and two driven wheels, suitable for various situations. The fact that wheels 12a and 14a are undriven wheels, i.e., free wheels, implies that the pressure "P" to be applied must be greater than if all wheels 11a, 12a, 13a, and 14a were driving wheels, i.e., wheels actuated by the at least one motor.

In a possible embodiment, the movable inspection device 10a described in connection with Figure 1 can further be optimized by varying the number of driving wheels engaged with the wire rope 1. A configuration with two driving wheels 11a and 13a and two driven wheels 12a and 14a can offer operational stability through cooperative engagement of the driving wheels on one lateral surface of the wire rope 1 and the driven wheels on the opposite lateral surface. Structurally, this embodiment connects the motor to the driving wheels, which transfer rotational motion through a transmission element 150a, enabling the device to traverse the wire rope 1. The driven wheels 12a and 14a, which remain free and unactuated, can provide balance and maintain the pressure force necessary for engagement with the wire rope 1.

Functionally, the pressure force required for this embodiment depends on parameters such as the rolling resistance coefficient, adhesion coefficient, system equivalent weight, and cable angle. The presence of driven wheels, being free and unactuated, can necessitate a pressure force that is approximately six times greater than that required for a configuration with four driving wheels. The forces, measured in newtons, ensure sufficient engagement between the wheels and the wire rope 1. This enables effective contact and motion of the movable inspection device 10a along the wire rope 1 but reflects a significant increase in energy requirements due to the lack of actuation in the wheels 12a and 14a.

Figure 2 illustrates a movable inspection device for operation along a wire rope according to an embodiment of the invention.

Specifically, a movable inspection device 10b is illustrated for operation along the wire rope 1, comprising a chassis 100b, a pair of driving wheels 11b and 13b and another pair of driving wheels 12b and 14b, the wheels 11b-14b being comprised on or in the chassis 100b. In this embodiment, all wheels 11b-14b are adapted to be in cooperative engagement with the wire rope 1, as in the embodiments of Figure 1, and none of the wheels is a free wheel.

In this embodiment, the movable inspection device 10b thus also comprises another pair of driving wheels 12b and 14b which are adapted to be in cooperative engagement with the second lateral surface of the wire rope 1, corresponding to the right side of the rectangle representing the wire rope 1.

Advantageously, a configuration with four driving wheels 11b, 12b, 13b, and 14b, wherein all wheels are directly actuated by at least one motor, can overcome this limitation. By eliminating the need for driven wheels, the pressure force required can be reduced by a factor of approximately six. This enables improved energy efficiency while maintaining stable cooperative engagement with the wire rope 1.

In this embodiment, the movable inspection device 10b further comprises at least one motor (not represented) configured to actuate any of the driving wheels 11b, 12b, 13b or 14b. In an example, the at least one motor actuates at least the driving wheel 11b, which is connected to the driving wheel 12b via one transmission arm 110b and to the driving wheel 13b via a transmission element 150b. Similarly, the driving wheel 13b is connected to the opposite driving wheel 14b via another transmission arm 120b.

In this example, the transmission arms 110b, 120b and the transmission element 150b can comprise a chain, a rope, or a gear set, so that the rotation of the wheel 11b, or the corresponding torque, can be transmitted to the driving wheel 12b with the transmission arm 110b. Similarly, the rotation of the wheel 11b can enable the rotation of the driving wheel 13b with the transmission element 150b, whereas the rotation of the driving wheel 13b can be transmitted to the opposite driving wheel 14b through the transmission arm 120b.

This allows the translational movement of the chassis 100b, and thus of the entire movable inspection device 10b, along the wire rope 1.

In this embodiment, a stable balance of the movable inspection device 10b is also ensured along the wire rope 1 through direct contact. This is achieved through the application of a pressure "P", maintaining the chassis 100a in contact with the wire rope 1 via the direct contacts of the driving wheels 11b-14b with the lateral surfaces of the wire rope 1. Again, the value of the pressure "P" can however be adjusted according to these parameters, while allowing the wheels to rotate while staying in contact with the wire rope 1, and thereby moving the chassis 100a along the wire rope 1.

Advantageously, this provides a movable inspection device comprising two pairs of driving wheels 11b, 12b, 13b, and 14b, which are directly or indirectly actuated by at least one motor via a transmission system comprising transmission arms 110b, 120b, and a transmission element 150b. An uniform actuation of all driving wheels is enabled, ensuring cooperative engagement with both lateral surfaces of the wire rope 1 and reducing the required pressure force compared to configurations with driven wheels.

In a possible embodiment, the driving wheels 11b-14b can be adjustable pressure wheels, enabling the applied pressure to be dynamically controlled to suit varying operational conditions, such as changes in the material properties or angle of the wire rope 1. This enables even pressure distribution through an articulated axle, ensuring consistent engagement and reducing localized stress.

In a possible embodiment, the driving wheels 11b-14b incorporate a V-shaped profile to enhance traction by creating a deeper contact profile with the wire rope 1. This enables increased resistance to slippage, particularly under dynamic loads or inclined rope conditions, while maintaining stable traction.

Advantageously, the structural features of the driving wheels, transmission system, adjustable pressure mechanisms, and wheel profiles are interconnected to ensure efficient and reliable operation of the movable inspection device 10b along the wire rope 1.

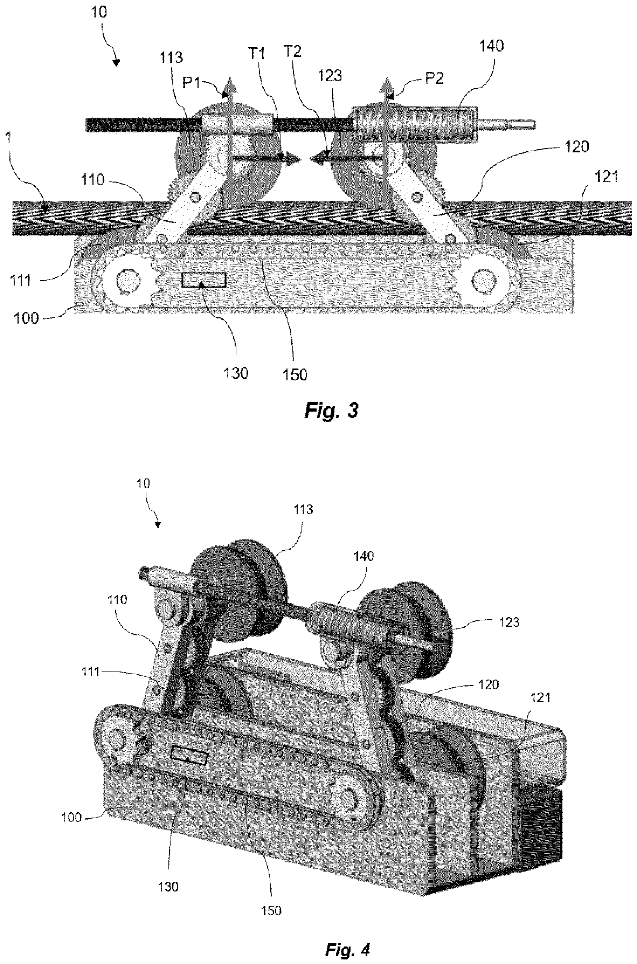

Figure 3 illustrates a side view of a movable inspection device according to an embodiment of the invention. Figure 4 represents a perspective view of the same movable inspection device.

Specifically, in the illustrated embodiment, there is provided a movable inspection device 10 for operation along a wire rope 1, the movable inspection device 10 comprising a chassis 100.

Herein, a "movable inspection device" may be understood as an apparatus capable of traversing a wire rope while performing operations such as inspection, maintaining cooperative engagement with the wire rope throughout its movement.

Advantageously, the chassis provides a structural framework designed to support and integrate the various mechanical and electronic components of the device 10. Advantageously, the chassis also provides stability and rigidity, ensuring that the components operate in unison under the dynamic forces encountered during movement along the wire rope 1. The chassis serves as a mounting platform for additional components and enables the integration of their functionalities.

In an embodiment, the movable inspection device 10 comprises at least one pair of drivable wheels, including a main wheel 111 and a secondary wheel 113.

Herein, drivable wheels may be understood as wheels configured to engage opposite lateral surfaces of the wire rope, with one wheel driving the other through torque transmission.

As illustrated, the main wheel 111 is adapted to be in cooperative engagement with a first lateral surface of the wire rope 1, while the secondary wheel 113 is adapted to engage a second lateral surface, preferable opposite to the first lateral surface. Advantageously, this configuration ensures that the device 10 maintains stable and aligned contact with the wire rope during movement, ensuring effective inspection and consistent traction.

In an embodiment, the main wheel is mounted on the chassis, while the secondary wheel is connected to the chassis via a transmission arm 110.

As illustrated, the movable inspection device 10 comprises at least one motor 130.

Herein, a motor may be understood as an electromechanical device capable of generating torque to actuate connected components such as wheels.

Advantageously, the motor 130 drives the main wheel 111, ensuring propulsion of the device along the wire rope 1. The motor is structurally connected to the chassis 100 and functionally linked to the main wheel, transmitting rotational force for driving the whole device.

As illustrated, the movable inspection device 10 comprises at least one transmission arm 110.

Herein, a transmission arm may be understood as a mechanical linkage designed to transfer torque and ensure synchronized movement between two connected components, such as the main wheel 111 and the secondary wheel 113.

Advantageously, such a transmission arm ensures that torque generated by the motor and transmitted to any main wheel is effectively relayed to its corresponding secondary wheel, maintaining cooperative engagement with the wire rope 1. In the present case, the transmission arm 110 is pivotally mounted on the chassis and connected to the secondary wheel, enabling flexibility and alignment adjustments during operation.

As illustrated, the movable inspection device 10 further comprises a tensioner module 140. Herein, a tensioner module may be understood as an assembly configured to apply an adjustable force to a transmission arm 110, ensuring that the engagement pressure between the wheels and the wire rope 1 remains consistent.

Advantageously, the tensioner module 140 compensates for variations in the geometry or surface properties of the wire rope, dynamically maintaining optimal cooperative engagement between the wheels and the wire rope.

In an embodiment, the movable inspection device according to claim 1 is adapted to provide an adjustable force, said adjustable force being applicable or being applied by the tensioner module 140 to the transmission arm 110 or 120.

Herein, an "adjustable force" may be understood as a force exerted by a mechanical element, such as a tensioner module, that can be varied in magnitude to achieve specific operational effects.

This enables the adjustable force to act along an oblique angle relative to the longitudinal direction of the transmission arm 110 or 120, the oblique angle causing the respective secondary wheels 113 or 123 to be brought into cooperative engagement with the wire rope 1 under a pressure force. The pressure force is balanced by a counterforce exerted by the wire rope 1, wherein the pressure is optionally adjustable by varying the stiffness of the tensioner module 140.

In an embodiment, the adjustable force, when applied to the transmission arm 110 or 120, leads the transmission arm to pull the secondary wheel 113 or 123 of each pair of drivable wheels 111, 113 or 121, 123 toward the respective main wheel 111 or 121 of the pair.

Herein, pulling may be understood as the action of drawing the secondary wheel closer to the main wheel to align both wheels in cooperative engagement with the wire rope 1.

Advantageously, this arrangement ensures that the one or more secondary wheel remains aligned with the main wheel, allowing both wheels to exert balanced and coordinated forces on opposite lateral surfaces of the wire rope 1. The tensioner module 140 applies the adjustable force to the transmission arm 110 or 120, which pivots around its connection towards the chassis 100, transmitting the force to adjust the position of the secondary wheel 113 or 123 relative to the main wheel 111 or 121.

In an embodiment, the adjustable force generates a pressure "P1" from the main wheel 111 (or "P2" if from the main wheel 121) and the secondary wheel 113 (or 123) of each pair of drivable wheels onto the wire rope 1.

Advantageously, this pressure ensures cooperative engagement of the wheels with the wire rope 1, enabling efficient traction and preventing slippage during operation. The pressure is optionally adjustable by varying the stiffness of the tensioner module 140, which modulates the magnitude of the force transmitted to the transmission arm 110 or 120.

Combining the adjustable force leading the transmission arm 110 and/or 120 to pull the secondary wheel 113 and/or 123 toward the respective main wheel and generating a pressure of the main wheel and secondary wheel of each pair onto the wire rope 1, the tensioner module 140 can play a dual role of pulling and pressure-adjusting, ensuring simultaneous alignment of the wheels and cooperative engagement with the wire rope.

In an embodiment, the two pairs of drivable wheels 111, 113, 121 and 123 of the movable inspection device 10 are arranged longitudinally along the direction of the wire rope 1.

This embodiment provides that the secondary wheels 113 and 123 are connected to the chassis 100 via the transmission arms 110 and 120, which are operatively linked to the tensioner module 140.

In this arrangement, the adjustable force acts along an oblique angle relative to the longitudinal axis of the transmission arms, causing the wheels to exert balanced and coordinated forces on the lateral surfaces of the wire rope 1. The pressure forces P1 and P2, exerted respectively by the main wheels 111 and 121, are balanced by counterforces exerted by the wire rope 1. The pressure is optionally adjustable by varying the stiffness of the tensioner module 140, allowing the device to adapt to varying cable diameters or surface properties.

This enables reduced pressure force requirements, improved torque distribution, and lower overall system load, particularly under conditions of low adhesion and rolling resistance.

Functionally, the motor 130 drives the main wheels 111 and 121, transmitting torque to the secondary wheels 113 and 123 through the transmission arms 110 and 120.

The tensioner module 140 dynamically adjusts the position and pressure of the secondary wheels, maintaining cooperative engagement with the wire rope 1. In other words, the tensioner module 140 applies an adjustable force to the transmission arms, enabling the secondary wheels to be pulled toward their respective main wheels and generating a pressure force that ensures engagement with the wire rope.

In one embodiment, the wheels of the movable inspection device 10 are configured to rotate in distinct rotation planes.

Herein, a rotation plane may be understood as the geometric plane defined by the axis of rotation and the circumferential motion of a wheel.

In this embodiment, the main wheel 111, the main wheel 121, the secondary wheel 113 and/or the secondary wheel 123 can be adapted with respect to each other so as to turn in respective rotation planes, which determine the spatial orientation of their rotational movement relative to the wire rope during operation. These planes do not have to be parallel, for instance in the case of misalignments.

In an embodiment, the movable inspection device 10 comprises a pivotal articulation (not represented). The pivotal articulation also called pivotal joint can be directly connected to the chassis 100.

Herein, a pivotal articulation may be understood as a structural configuration enabling relative movement between the rotation plane of the secondary wheel 113 or 123 and the rotation plane of the main wheel 111 or 121, while maintaining controlled interaction with the wire rope.

In an example, the rotation plane of the secondary wheel 113 or 123 can be pivotally movable relative to the rotation plane of the main wheel 111 or 121. Structurally, this pivotal articulation can induce the application of a pressure from the secondary wheel 113 or 123 onto the wire rope 1 when the wheels are in cooperative engagement.

This enables adapting its position to accommodate oblique irregularities of the wire rope 1, such as misalignments or curvature deviations, ensuring consistent contact. This also ensures an even distribution of the force exerted by the secondary wheels on the wire rope 1, since the position of the secondary wheels is dynamically adjusted by the pivotal articulation when the movable inspection device 10 is moving along the wire rope 1.

The pivotal articulation is structurally and functionally linked to the tensioner module 140, which applies an adjustable force to the transmission arms 110 or 120. This ensures that the secondary wheel 113 or 123 maintains the required pressure against the wire rope while dynamically compensating for irregularities.

Advantageously, this embodiment provides a mechanism for accommodating variations in the wire rope's geometry, maintaining continuous and stable engagement during operation.

In an embodiment, this pivotal articulation, or simply, this articulation, compensates any misalignment between the rotation plane of the main wheel 111 (or 121) and the rotation plane of the secondary wheel 113 (or 123). In addition, if the articulation is pivotally connected to the chassis (100), to the respective secondary wheel 113 (or 123) and/or to the at least one transmission arm 110 (or 120), this enables an even more uniform distribution of the exerted pressure.

The aforementioned embodiments lead to additional effects when combined with the tensioner module 140. Advantageously, the tensioner module 140 enables the movable inspection device 10 to adapt to challenging scenarios, such as operation on vertical or slippery cables.

For example, when the movable inspection device 10 weighs 20 kilograms (kg) and an adhesion force of 250 N is provided, it can be computed that the required force to move upward on a vertical cable is approximately 640 N, equivalent to a weight of 64 kg. In equilibrium, this force is transmitted via the tensioner module 140 to the transmission arms 110 and 120, which distribute the tension T1 and T2 to maintain consistent engagement.

For instance, it can be computed that the braking force necessary to retain the system in place while moving downward is approximately 140 N, which corresponds to an operational adjustment of the tension applied by the tensioner module to counterbalance downward motion. On a 20° inclined cable, the required upward force reduces to approximately 120 N, equivalent to a weight of 11 kg, with the engagement pressures P1 and P2 dynamically adjusted by the tensioner module to maintain traction and movement.

In a possible embodiment, the motor 130, which is responsible for delivering the required propulsion, is reversible, i.e., it is adapted for dissipating braking energy efficiently during descent.

Advantageously, the reversibility of the motor enables precise velocity control, ensuring that the device remains stable and safe across varying inclinations. The torque generated by the motor is transferred to the main wheels 111 and 121, which in turn drive the secondary wheels 113 and 123 through the transmission arms 110 and 120, ensuring synchronized motion. The interplay between the motor 130, the tensioner module 140, and the transmission arms 110 and 120 ensures that the device can dynamically adjust its operation to varying conditions, such as significant inclinations or differing cable geometries.

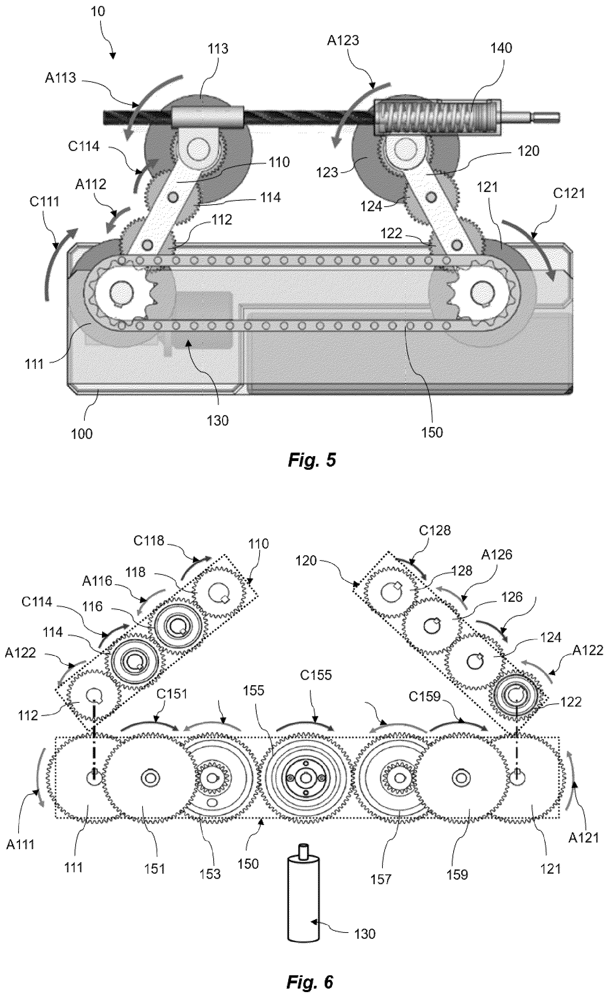

Figure 5 represents a side view of a movable inspection device for operation along a wire rope according to an embodiment of the invention.

In one embodiment, the movable inspection device 10 comprises two transmission arms 110 and 120, each of them connecting a corresponding main wheel 111 (or 121) to one secondary wheel 113 (or 123).

Herein, a transmission arm may be understood as a mechanical structure or linkage configured to transfer rotational torque from a primary rotating member to a secondary rotating member through one or more intermediate components.

The motor 130 is structurally connected to the main wheels 111 and 121, enabling direct actuation of these wheels to initiate movement. Advantageously, the transmission arms ensures that the torque applied to the main wheels 111, 121 is transmitted efficiently to the secondary wheel 113, 123 to maintain synchronized rotation.

In an embodiment, at least one of the transmission arms 110 and 120 comprises a transmission chain. Herein, a transmission chain may be understood as a mechanical assembly of interlinked elements, such as gears, sprockets, or chains, that transmit motion and torque between two rotating shafts.

Advantageously, the use of a transmission chain within a transmission arm enables reducing mechanical complexity while maintaining a high degree of efficiency in torque transfer. This also facilitates easier cleaning, maintenance, and disassembly while ensuring durability and reliability in environments involving hard surfaces or heavy loads.

In this embodiment, the transmission chains of the transmission arms 110 and 120 includes at least one element selected among a sprocket, a chain arrangement, a gear, or a belt.

For instance, in the figure, the transmission arm 110, 120 incorporates gears 112, 114, 122, 124, which effectively transfer torque from the main wheel 111, 121 to the secondary wheel 113, 123, following the actuation of one of the main wheels 111 and 121 by at least one motor 130 of the chassis 100.

As illustrated, the motor 130 drives the main wheels 111 and 121 in a clockwise rotation "C111" and "C121," respectively. Advantageously, the clockwise rotation "C111" of the main wheel 111 and the clockwise rotation "C121" of the main wheel 121 initiate the motion of the movable inspection device 10 along the wire rope 1.

In this embodiment, the secondary wheels 113 and 123 are mechanically linked to their corresponding main wheels 111 and 121 via the transmission arms 110 and 120, which include interlinked gears 112, 114 for the left side and 122, 124 for the right side. The clockwise rotation "C111" of the main wheel 111 drives the gear assembly 112, 114 within the transmission arm 110. This interaction translates the rotational torque to induce an anticlockwise rotation "A113" of the secondary wheel 113. Similarly, the clockwise rotation "C121" of the main wheel 121 drives the gear assembly 122, 124 within the transmission arm 120, resulting in an anticlockwise rotation "A123" of the secondary wheel 123. The synchronized counter-rotation "A113" of the secondary wheel 113 and "A123" of the secondary wheel 123 ensures a continuous and stable engagement with the wire rope 1.

Functionally, the torque generated by the motor is transmitted to the secondary wheels 113 and 123 through the transmission arms 110 and 120, thereby coordinating the motion of all four wheels.

An example of motor 130 is direct brushless motor with a power output of 4.2 kW. The two-stage reduction gear train, which can also be a three-stage gear reduction system, provides for instance a 16:1 torque ratio, with or without integrated transmission chains. An example of such motor typically weighs 1 kilogram and can directly be connected to the gear reduction system, which actuates the wheels. Advantageously, this configuration delivers consistent torque distribution, enabling smooth operation under varying load conditions and improving the adaptability of the inspection device.

In one embodiment, the movable inspection device 10 includes a tensioner module 140 associated with the secondary wheels 113 and 123.

In this embodiment, the tensioner module 140 is configured to apply an adjustable force to the transmission arms 110 and 120, ensuring that the main wheels 111, 121 and secondary wheels 113, 123 maintain direct contact with the respective lateral surfaces of the wire rope 1.

Advantageously, and as will be further described below, this adjustment also allows the device to adapt to variations in the diameter or surface irregularities of the wire rope, ensuring consistent engagement and preventing operational disruptions.

Figure 6 represents a schematic view of transmission chains for a movable inspection device according to an embodiment of the invention.

Herein, a transmission chain may also be understood as a mechanical assembly that includes interconnected elements, such as sprockets and gears, designed to transfer torque between two or more rotating components.

In one embodiment, each of the transmission arms 110 and 120 of the movable inspection device 10 comprises a transmission chain, said transmission chain comprising an even number of gears, referred to as a transmission gear set.

In one embodiment which will be discussed below, the chassis 100 of the movable inspection device 10 also comprises a transmission chain which itself comprises a two-stage reduction gear train 150, the two-stage reduction gear train 150 including a belt, multiple gears or both.

In one embodiment, the two-stage reduction gear train 150 includes a belt and/or an odd number of gears.

Herein, a transmission gear set may be understood as an arrangement of mechanical gears designed to transfer rotational energy in a defined sequence while maintaining the input-

In the illustrated embodiments, a motor 130 is positioned centrally in the two-stage reduction gear train 150, also called drivetrain, and directly drives the main wheels 111 and 121 via gears 151, 153, 155, 157, and 159 located between the main wheels 111 and 121. The clockwise rotation "C111" of the main wheel 111 is driven by the motor 130 through the central chain and gears, forming the primary torque path. Similarly, the clockwise rotation "C121" of the main wheel 121 is driven by the same chain and gear arrangement, ensuring synchronized actuation of both main wheels.

As the two-stage reduction gear train 150 is interposed between the motor 130 and the main wheels 111 and 121, it is forming a direct mechanical linkage that distributes the torque generated by the motor to the wheels.

In other words, in this embodiment, the motor 130 drives the central input gear of the reduction gear train 150, which consists of two sequential stages of gear engagement. In each stage, torque is transferred between meshing gears, with the speed of rotation progressively reduced as torque is amplified. The belt, if present, acts as a flexible coupling to further transfer torque between the reduction stages or the output shaft, ensuring smooth operation.

Advantageously, the modularity of the drivetrain system, with possibly different gear sizes, minimizes mechanical complexity while enabling precise torque transfer and speed adjustments through the corresponding transmission gear set.

In one embodiment, the movable inspection device incorporates a drivetrain featuring a two-stage reduction gear train configured to transmit torque from the motor 130 to the main wheels 111, 121.

For instance, the drivetrain can ensure that the rotational speed of a brushless motor 130, operating at 5000 rpm, is progressively reduced to a maximum wheel speed of 330 rpm, corresponding to the required operational speed along the wire rope 1.

Herein, a brushless motor may be understood as an electromechanical device employing permanent magnets and electronic control to produce rotational motion. Advantageously, the low-maintenance nature of the brushless motor reduces system downtime and operational costs while ensuring long-term reliability.

In a possible embodiment, the main wheels have the same diameter. Advantageously, this ensures a balanced torque transmission.

In an embodiment, each main wheel 111, 121 is structurally linked to its corresponding secondary wheel 113, 123 through a respective transmission arm 110, 120. Each transmission arms incorporate an even number of gears, forming the transmission gear set.

In this embodiment, for the left-side transmission arm 110, the anti-clockwise rotation "A111" of the main wheel 111 drives gear 112 in an anti-clockwise manner, the gear 112 being engaged with gear 114, then gear 116, and finally gear 118, overall resulting in the clockwise rotation "C118" of the last gear 118, which itself generates the anti-clockwise rotation of the secondary wheel 113 (not represented here) when engaged to the latter.

In this embodiment, for the right-side transmission arm 120, the anti-clockwise rotation "A121" of the main wheel 121 drives gear 122 in an anti-clockwise manner, the gear 122 being engaged with gear 124, then gear 126, and finally gear 128, overall resulting in the anti-clockwise rotation "A128" of the last gear 128, which itself generates the anti-clockwise rotation "A123" of the secondary wheel 123 (not represented here) when engaged to the latter.

This enables the synchronization of the rotations of the main and secondary wheels, ensuring stable engagement with the wire rope 1, while reducing the rotational speed at the secondary wheel to a value suited for operation. The even number of gears allows for precise rotational synchronization while accounting for energy losses, providing optimal torque output for the wheels.

In one embodiment, the movable inspection device comprises a pair of drivable wheels, in which at least one of the main wheel 111, of the main wheel 121, of the secondary wheel 113 and of the secondary wheel 123 has a diameter comprised between 80 millimeters (mm) and 120 mm, said diameter being preferably equal to 90 mm.

Advantageously, a wheel diameter within this range provides an optimal balance between rotational speed and torque.

In an embodiment, the circumference of at least one of the secondary wheels 113 and 123 includes a respective groove.

Herein, a groove may be understood as an indented channel formed along the circular profile of the wheel to accommodate a specific surface geometry.

In an embodiment, the respective groove includes a shaped angle larger than 90° and smaller than 120°.

Herein, a shaped angle may be understood as the angle formed by the sloping sides of the groove relative to the axis of rotation of the wheel.

This ensures an optimal balance between mechanical performance, force distribution, and chassis size. Specifically, the 90 mm diameter with a 120° groove angle provides improved mechanical and weight optimization, reduced force concentration at critical positions, and a minimized chassis size increase. The 90 mm diameter with a 90° groove angle offers an alternative configuration with higher force concentration but remains within acceptable limits for effective operation.

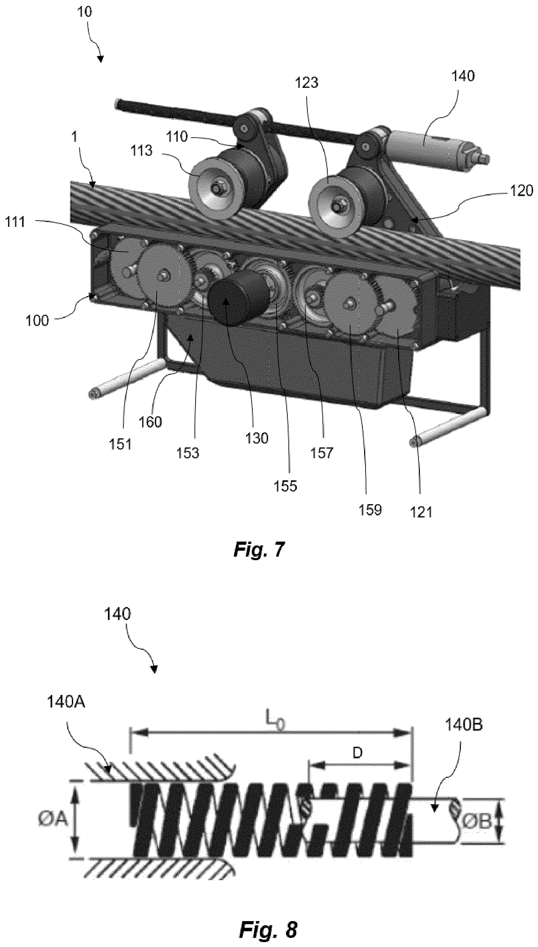

Figure 7 illustrates, in a perspective view, a movable inspection device according to an embodiment of the invention.

Specifically, the illustrated movable inspection device 10 provides improved features with respect to the embodiments shown in Figures 3 and 4.

In this embodiment, the movable inspection device 10 is intended for operation along a wire rope 1, and comprises, inside a closed chassis 100, a two-stage reduction gear train 150 with two main wheels 111 (not visible) and 121, gears located in between and represented by gears 151, 153, 155, 157, and 159. A motor 130 actuates the central gear 155 of the two-stage reduction gear train 150.

Similarly to the previous embodiments, the movable inspection device 10 comprises secondary wheels 113 or 123 that can be brought into cooperative engagement with the wire rope 1 under a pressure force. The transmission arms 110 or 120 connected to the chassis 100 are adapted to pull the secondary wheel 113 (or 123) of each pair of drivable wheels 123 toward the respective main wheel 111 (or 121) of the pair.

The tensioner module 140 applies the corresponding adjustable force to the transmission arm 110 or 120, transmitting said force and adjusting the position of the secondary wheel 113 or 123 relative to the main wheel 111 or 121.

In this embodiment, each of the transmission arms 110 and 120 also comprises a transmission chain including gears. As illustrated, the transmission arms 110 and 120 each incorporates a given number of gears (not visible) which effectively transfer torque from the main wheels 111 and 121 to the secondary wheel 113, 123, following the actuation of the gear 155 in the two-stage reduction gear train 150 by the at least one motor 130 of the chassis 100. In other words, the main wheels 111, 121 are driven directly by the output gears 151, 159 of the two-stage reduction gear train 150.

In this embodiment, the chassis 100 defines or includes a closed housing in which the internal elements can be protected from external conditions. For instance, the chassis 100 can further house the various electrical components configured to operate the movable inspection device 10.

In an embodiment, a battery is connected to the chassis 100 and is adapted to power said internal elements and/or the at least one motor 130.

In an embodiment, the chassis 100 defines or comprises an electronic enclosure.

Herein, an electronic enclosure may be understood as a closed housing designed to protect its components, such as electronic components, including the motor, and emergency systems from external environmental conditions.

In an embodiment, the enclosure of the chassis 100 comprises aluminum, which ensures durability and structural integrity, and is sealed against water and dust.

For instance, the electronic enclosure can comprise a CPU board and a motor driver, mounted directly onto the two-stage or three-stage reduction drive train, simplifying connections.

In an embodiment, an emergency stop mechanism is positioned in the electronic enclosure, and separately from control buttons positioned in or on the electronic enclosure, enhancing safety and reducing operational errors.

In an embodiment, the chassis 100 of the movable inspection device 10 is a lightweight chassis.

Herein, a lightweight chassis may be understood as a structural framework designed to house and support the device's components while minimizing weight, e.g., by including reducing plate thickness and shortening the length of attachment elements, such as screws. Advantageously, a lightweight chassis enables providing a movable inspection device lighter than 25 kilograms, thereby balancing portability and structural durability.

In an embodiment, the movable inspection device 10 comprises additional safety features such as a bumper integrated with the chassis 100, or any type of protective element designed to minimize the risk of damage due to collisions of the device 10 during operation.

In an embodiment, the movable inspection device 10 comprises secondary wheels made partially or completely of polyurethane.

Advantageously, polyurethane enables providing rolling elements designed with a durable polymer surface for enhanced adhesion and longevity. The wheels undergo adhesion and rolling resistance testing using prototype wheels and test benches.

In an embodiment, the secondary wheels are configured to engage optimally with the wire rope 1. Specifically, in an embodiment, the secondary wheels are V-shaped and designed to be compatible with wire ropes of diameters ranging from 18 to 58 mm. In the same embodiment, the V-shape profile defines an angle between 90° and 120°.

Advantageously, a 90° configuration enhances adhesion by increasing contact surface area, resulting in a calculated improvement of more than 20% compared to previous tests. Still advantageously, a 120° configuration enables easier integration with the chassis 10 while maintaining effective engagement.

In an embodiment, the secondary wheels include a groove over-molded design with a 30° to 45° angle for enhanced rolling resistance and adhesion. Advantageously, this embodiment ensures consistent engagement with various wire rope diameters, minimizing wear and optimizing performance during operation.

In an embodiment, the movable inspection device 10 comprises a data transmission system (not represented), preferably comprised in the chassis 100 or in an electronic enclosure thereof.

Herein, a data transmission system may be understood as a set of components configured to enable communication between the inspection device and an external operator or control unit.

Advantageously, this embodiment enables remote control and monitoring of the inspection device, ensuring uninterrupted communication.

In an embodiment, the movable inspection device 10 comprises an emitter/receiver system (not represented), which may be identical to the data transmission system.

Herein, an emitter/receiver system may be understood as a combination of electronic components configured to transmit and receive electromagnetic signals, enabling communication between the movable inspection device 10 and an external control system.

Advantageously, this enables the remote control of the at least one motor 130. The electromagnetic control signals may include radio frequency signals or other forms of wireless communication, allowing commands to be sent to the motor 130 and operational data to be transmitted back to the operator.

In an embodiment, the data transmission system and/or the emitter/receiver system is housed within the chassis 100 of the movable inspection device 10.

Advantageously, the data transmission system can be powered by the battery 160, which is for instance a rechargeable and/or removable lithium polymer battery, able to provide long-term power while keeping light the weight of the movable inspection device 10.

In an embodiment, the movable inspection device 10 comprises one or more control interfaces (not represented) linked to the data transmission system.

Herein, control interfaces may be understood as external input mechanisms designed to adjust or monitor device parameters in real time. These interfaces can be positioned on the chassis 100 for operator access and include distinct buttons for specific functions, such as an emergency stop mechanism separated from other controls to enhance safety. One or more interfaces can also be internal and linked to a distant remote associated to the movable inspection device 10, the data transmission system ensuring seamless data exchange with the distant remote.

Figure 8 illustrates a tensioner module for a movable inspection device according to an embodiment of the invention.

Specifically, a tensioner module 140 is represented according to an embodiment, wherein said tensioner module 140 comprises a return element configured to apply the adjustable force for the movable inspection device 10.

Specifically, the tensioner module 140 can be adapted to apply an adjustable force to any of the transmission arms 110 and 120 of the movable inspection device 10, enabling cooperative engagement of its wheels with a wire rope.

In an embodiment, the tensioner module 140 comprises a return element.

Herein, a return element may be understood as a device or structure capable of storing and releasing energy, such as a spring, to exert a force that restores or maintains the relative positions of components.

In this embodiment, the return element of the tensioner module 140 comprises one or more springs configured to apply the adjustable force.

In an embodiment, the spring(s) of the tensioner module 140 comprise(s) a threaded rod, enabling the tensioner module 140 to adjust the stiffness of the spring(s) by a tightening or a loosening of the threaded rod. In turn, the adjustment of the stiffness enables varying the magnitude of the adjustable force applicable or applied by the tensioner module 140 to transmission arm(s) 110 and/or 120.

Herein, a threaded rod, which can also be any type of threaded adjustment mechanism, may be understood as a device comprising threaded elements enabling fine control of mechanical forces through tightening or loosening.

In this embodiment, the threaded rod is configured to connect to threaded portions 140A and 140B, which can serve as anchoring points for the return element. The threaded portions 140A and 140B have diameters "ØA" and "ØB", respectively, defining the possible values of the effective length of the spring, denoted as "D", which directly affects the displacement from its equilibrium length "L0".

This enables precise and controlled contact between the secondary wheels 113/123 and the wire rope 1, accommodating the possible variations in wire rope diameter and operational conditions. The ability to modulate the adjustable force applied by the tensioner module 140, using the threaded rod to vary the length "D" of the return element, ensures that the wheels maintain consistent engagement without excessive pressure.

Herein, according to Hooke's Law, the force applied by the tensioner module 140 is proportional to the compression of the spring. In other words, the adjustment of "D" by the threaded rod modulates the corresponding spring constant, which is thereby defined by the geometries ØA and ØB of the threaded portions. By tightening the threaded rod to reduce "D", the displacement of the spring increases, resulting in a higher force. Conversely, loosening the threaded rod increases "D", reducing the displacement of the spring and decreasing the force. The threaded portions 140A and 140B, with diameters ØA and ØB, also ensure that the mechanical connection remains robust during high levels of tension.

The threaded rod and return element are functionally and structurally linked to the transmission arms 110 and 120, ensuring that the adjustable force is transmitted effectively to control the engagement of the secondary wheels with the wire rope.

This enables the adjustment of the stiffness of the tensioner module 140 or of the associated spring(s) through tightening or loosening of the threaded rod, allowing the tension force applied to the transmission arms to be finely controlled.

For instance, if the tensioner module 140 incorporates multiple springs in series or parallel and configured to accommodate different stiffness ranges, it is possible to achieve specific operational requirements. For instance, selecting two high-load springs with a combined stiffness of approximately 265 N/mm ensures that the module can generate sufficient wheel pressure, up to a maximum of approximately 1700 N, to engage with different types of wire ropes under varying conditions, such as low friction cables or highly inclined cables.

In one embodiment, the tensioner module 140 comprises a dimensioning system to vary the magnitude of the adjustable force.

This dimensioning system allows the tensioner module 140 to precisely adjust the force applied by the tensioner module 140, in a discrete, i.e., non-continuous, way, based on the wanted requirements of the device with respect to wheel pressure.

In an embodiment, the dimensioning system is integrated into the tensioner module 140. An interface can also be provided to input the magnitude of the adjustable force.

For instance, if the interface is a digital switch, an operator can manipulate it to select the magnitude of the adjustable force depending on the diameter of the wire rope 1.

In embodiments, the interface can suggest selecting a given diameter of the wire rope 1, selected among the options of 18 mm, 30 mm, 45 mm, or 58 mm. The digital switch so provides an intuitive and precise mechanism for a user to input the correct force magnitude based on the selected wire rope diameter, enabling an adjustment of the force applied.

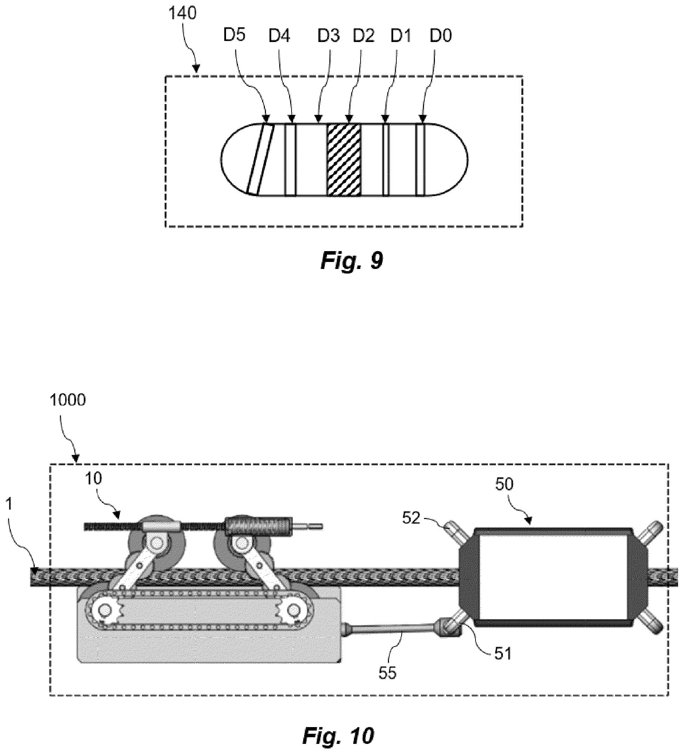

Figure 9 represents a tensioner module for a movable inspection device according to another embodiment of the invention.

As illustrated, this tensioner module 140 comprises an analog scale which itself provides an interface for inputting the magnitude of the adjustable force.

In an embodiment, this analog scale comprises positions labeled "00" through "D5", representing discrete levels of adjustment, correlating with specific configurations of the springs integrated into the tensioner module 140. These positions correspond to increasing levels of spring rigidity and, consequently, increasing magnitudes of adjustable force. The interface allows the operator to select a specific position based on the operational requirements, with intermediate positions on the scale enabling fine-tuning of the force to apply.

Herein, an analog scale may be understood as a mechanism that provides a continuous range of adjustments, where the input force magnitude correlates with the rigidity of the return elements, such as selecting different springs or different options of the threaded rod, when integrated into the tensioner module 140.

Advantageously, this embodiment provides a mechanism for fine-tuning the tensioner module 140, enabling continuous and precise adjustments of the applied force. The positions "00" through "D5", as depicted in the drawing, visually represent the nature of the adjustment.

In an embodiment, each position on the scale corresponds to a defined spring deflection and rigidity. For instance, at position D0, the deflection and force are minimal, suitable for smaller wire ropes, whereas at position D5, the highest rigidity and force output are achieved, enabling effective engagement with larger wire ropes. Positions D1, D2, D3, D4 and D5 can be associated to specific force outputs depending on the corresponding wire rope diameters, e.g., 18 mm, 30 mm, 45 mm, and 58 mm.

Advantageously, a lookup table defining these associations can be included in or on the tensioner module 140 for assisting an operator by providing exact force values for each combination of scale position and wire rope diameter. This enhances the versatility of the movable inspection device by providing a mechanism for fine-tuning the applied force while ensuring reliable engagement and consistent performance under various conditions.

In an embodiment, two high-load springs arranged in series with a combined stiffness of approximately 264 N/mm can used and dimensioned to handle the range of forces required for optimal engagement of the movable inspection device 10 with the wire rope 1.

Figure 10 illustrates a Magnetic Rope Testing system according to an embodiment of the invention.

Specifically, an MRT system 1000 is illustrated as comprising a movable inspection device 10 according to at least one of the aforementioned embodiments, and an MRT unit 50, intended for operation along a wire rope 1.

Herein, an MRT system may be understood as any system comprising a movable device and an MRT unit connected to said movable device in such a way as to enable coordinated operation and motion along a wire rope. An MRT unit is any type of magnetic rope testing unit equipped with components to generate magnetic fields for testing purposes of such a wire rope.

In an embodiment, the MRT system 1000 further comprises a plurality of anchor points 51 and 52.

In an embodiment, the MRT unit 50 is connected to the movable inspection device 10 via at least one adjustable rod 55.

Advantageously, the adjustable rod 55 can be structurally linked to both the MRT unit 50 and the movable inspection device 10, enabling positional adjustments that compensate for angular misalignments or irregularities along the wire rope.

Herein, anchor points may be understood as structural elements disposed on or inside the MRT unit configured to secure its position on the wire rope and/or to the movable inspection device and prevent rotational instability. An adjustable rod may also be, more generally, any type of mechanical link adapted for connecting the movable inspection device and the MRT unit while allowing for angular and positional adjustments.

Advantageously, the structural integration of the adjustable rod 55 with the MRT unit 50 ensures that such positional adjustments compensate for irregularities along the wire rope, such as inclines or curvature.

This enables reliable adherence of the MRT system 1000 to the wire rope 1, with the adjustable connecting rod 55 compensating for angular misalignments between the MRT unit 50 and the movable inspection device 10. The connecting rod ensures smooth operation along irregular or inclined wire ropes by maintaining proper alignment.

In an embodiment, the anchor points can be further designed or positioned to allow the MRT unit to maintain its alignment and movement along the wire rope without risk of disconnection or destabilization.

In one embodiment, the MRT system 1000 comprises an MRT unit 50 connected to the movable inspection device 10 with at least one adjustable rod 55 and/or with the plurality of anchor points 51 and 52. This provides a single system moving structurally as a whole along the wire rope 1, ensuring a smooth and coordinated motion.

In a possible embodiment, the MRT system 1000 is designed to operate under specific conditions, such as greasy, dusty, or lubricated wire ropes with diameters ranging from 18 mm to 58 mm, and angles of inclination up to 90 degrees.

In a non-limiting example, fixation arms on the MRT unit 50 can comprise adaptable anchor points, allowing secure attachment to external structures using methods like carabiners or cope mechanisms. These fixation arms facilitate rapid deployment across varying environmental conditions.

In a possible embodiment, the connecting rod 55 comprises universal joints to enable compensation for angular misalignments between the movable inspection device 10 and the MRT unit 50.

Herein, universal joints may be understood as mechanical links that provide flexibility in multiple directions, allowing the connected components to maintain alignment despite changes in orientation. This functionality ensures smooth operation along irregularly shaped or inclined wire ropes.

Advantageously, the integration of universal joints in the connecting rod 55 and the adaptability of anchor points 51 and 52 ensure stable and coordinated movement of the MRT system 1000. This configuration provides a reliable and efficient mechanism for inspecting wire ropes under challenging conditions, maintaining proper alignment and minimizing operational disruptions.

Further, the present subject disclosure comprises more embodiments according to the following clauses A to Q:
A. An apparatus configured to move along a wire rope, the apparatus comprising:
   - a chassis;
   - at least one pair of drivable wheels connected to the chassis, each pair of drivable wheels including
      ∘ a main wheel, comprising a first groove designed to engage cooperatively with a first lateral surface of the wire rope;
      ∘ a secondary wheel, comprising a second groove designed to engage cooperatively with a second lateral surface of the wire rope which is distinct and opposite to the first lateral surface;
         the movable inspection apparatus further comprising
         - at least one motor actuating the main wheel of each pair of drivable wheels;
         - at least one transmission arm connecting each main wheel of each pair of drivable wheels to a respective secondary wheel of the pair of drivable wheels, the transmission arm transmitting a torque driving the respective secondary wheel in response to the actuation of the main wheel; and
         - a tensioner module attached to each secondary wheel, the tensioner module being applying an adjustable force to the at least one transmission arm, the applied adjustable force engaging cooperatively the main wheel with the first lateral surface of the wire rope, the main wheel being in direct contact with the first lateral surface of the wire rope, and the secondary wheel being in direct contact with the second lateral surface of the wire rope.
B. The apparatus according to clause A, wherein the adjustable force, when applied to the at least one transmission arm, leads the transmission arm to pull the secondary wheel of each pair of drivable wheels toward the main wheel which is respective of the pair of drivable wheels.
C. The apparatus according to clause A, wherein the adjustable force, when applied to the at least one transmission arm, generates a pressure of the main wheel and of the secondary wheel of each pair of drivable wheels onto the wire rope, the pressure force being balanced by a counterforce exerted by the wire rope, the pressure being adjustable by varying the stiffness of the tensioner module.
D. The apparatus according to clause A, wherein the pair of drivable wheels consists of two pairs of drivable wheels which are disposed longitudinally along the direction of the wire rope, each pair being configured such that each main wheel and the secondary wheel respective of said main wheel comprise a respective groove designed to engage cooperatively with the wire rope.
E. The apparatus according to clause A, wherein the at least one transmission arm comprises a transmission chain connecting the main wheel to the secondary wheel respective of the main wheel, the transmission chain including at least one element selected among a sprocket, a chain arrangement, a gear, or a belt.
F. The apparatus according to clause A, wherein the at least one transmission arm comprises a transmission chain, the transmission chain comprising a transmission gear set, the transmission gear set comprising an even number of gears, the actuation of the main wheel by the at least one motor driving the transmission gear set, the transmission gear set being transmitting the torque from the main wheel to the secondary wheel respective of the main wheel.
G. The apparatus according to clause A, wherein the transmission chain comprises a two-stage reduction gear train, the two-stage reduction gear train including at least one of a belt and an odd number of gears, the two-stage reduction gear train transmitting a reduced rotational speed when the main wheel is actuated by the at least one motor.
H. The apparatus according to clause A, wherein at least one of the main wheel and the secondary wheel of the pair of drivable wheels has a diameter comprised between 80 mm and 120 mm.
I. The apparatus according to clause A, wherein the secondary wheel of the pair of drivable wheels has a circumference which includes a respective groove, the respective groove having a shaped angle larger than 90° and smaller than 120°.
J. The apparatus according to clause A, wherein the tensioner module comprises one or more springs applying the adjustable force.
K. The apparatus according to clause A, wherein the tensioner module comprises one or more springs applying the adjustable force, the one or more springs of the tensioner module comprising a threaded rod, the tensioner module adjusting the stiffness of the one or more springs by a tightening or a loosening of the threaded rod, the adjustment of the stiffness varying the magnitude of the adjustable force applicable by the tensioner module to the at least one transmission arm.
L. The apparatus according to clause A, wherein the tensioner module comprises one or more springs applying the adjustable force, the tensioner module further comprising a dimensioning system varying the magnitude of the adjustable force applicable by the tensioner module to the at least one transmission arm, the dimensioning system comprising an interface operable to input the magnitude of the adjustable force, the interface being selected among:
   - a digital switch inputting the magnitude of the adjustable force depending on a diameter of the wire rope, the diameter of the wire rope being selected among 18 mm, 30 mm, 45 mm or 58 mm; and
   - an analog scale inputting the magnitude of the adjustable force as a continuous function of the rigidity of the one or more springs.
M. The apparatus according to clause A, wherein the tensioner module comprises one or more springs applying the adjustable force, the main wheel and the secondary wheel of each pair of drivable wheels turns in a respective rotation plane, the rotation plane of the secondary wheel being pivotally movable relative to the rotation plane of the main wheel to adapt to oblique irregularities of the wire rope, the articulation exerting a pressure from the secondary wheel onto the wire rope when in cooperative engagement for adapting the position of the secondary wheel to the oblique irregularities.
N. The apparatus according to clause A, wherein the tensioner module further comprises a pivotal articulation and one or more springs applying the adjustable force the main wheel and the secondary wheel of each pair of drivable wheels turning in a respective rotation plane, the rotation plane of the secondary wheel being pivotally movable relative to the rotation plane of the main wheel by said pivotal articulation to adapt to oblique irregularities of the wire rope, the pivotal articulation exerting a pressure from the secondary wheel onto the wire rope when in cooperative engagement for adapting the position of the secondary wheel to the oblique irregularities, the pivotal articulation compensating a misalignment between the rotation plane of the main wheel and the rotation plane of the secondary wheel, the pivotal articulation being pivotally connected to at least one of the chassis, the respective secondary wheel, and to the at least one transmission arm, thereby enabling an even distribution of the exerted pressure.
O. The apparatus according to clause A, further comprising an emitter/receiver system housed within the chassis, the emitter/receiver system being operable to transmit and receive electromagnetic control signals for remotely controlling the at least one motor.
P. A Magnetic Rope Testing (MRT) system comprising:
   - The apparatus according to clause A;
   - an MRT unit comprising a connector being connected to the apparatus; the MRT unit comprising a plurality of anchor points and a magnet generating a magnetic force for steadily maintaining the unit system on the wire rope; and
   - at least one adjustable rod connecting the MRT unit to the apparatus, one or more of the at least one adjustable rod and the plurality of anchor points securing the movement of the MRT unit along the wire rope relative to the apparatus when the MRT unit is connected to the apparatus with the at least one adjustable rod and/or the plurality of anchor points.
Q. A Magnetic Rope Testing (MRT) system comprising:
   - the apparatus according to clause A;
   - an MRT unit comprising a connector being connected to the apparatus, the MRT unit comprising a plurality of anchor points and a magnet generating a magnetic force for steadily maintaining the unit system on the wire rope; and
      - at least one adjustable rod connecting the MRT unit to the apparatus, one or more of the at least one of the adjustable rod and the plurality of anchor points securing the movement of the MRT unit along the wire rope relative to the apparatus when the MRT unit is connected to the apparatus with the at least one adjustable rod or the plurality of anchor points, wherein the MRT unit is connected to the apparatus with the at least one adjustable rod or with the plurality of anchor points.

Although the present disclosure and the embodiments described therein have been shown and described with reference to specific preferred embodiments, this is not to be construed as limiting the invention itself. Various changes may be made in form and details without departing from the scope of the invention as defined by the appended claims.

## Claims

1. A movable inspection device (10) for operation along a wire rope (1), comprising:
• a chassis (100),
• at least one pair of drivable wheels (111, 113; 121, 123) connected to the chassis (100), each pair of drivable wheels including
- a first drivable wheel (111 ; 121), called main wheel (111 ; 121), adapted to be in cooperative engagement with a first lateral surface of the wire rope (1), and
- a second drivable wheel (113 ; 123), called secondary wheel (113 ; 123), adapted to be in cooperative engagement with a second lateral surface of the wire rope (1) which is distinct and opposite to the first lateral surface,
the movable inspection device (10) further comprising
• at least one motor (130) configured to actuate the main wheel (111 ; 121) of each pair of drivable wheels,
• at least one transmission arm (110; 120) connecting each main wheel (111 ; 121) of each pair of drivable wheels to a respective secondary wheel (113 ; 123) of said pair of drivable wheels, the transmission arm (110 ; 120) being configured to transmit torque driving the respective secondary wheel (113 ; 123) in response to the actuation of the main wheel (111 ; 121), and
• a tensioner module (140) attached to each secondary wheel (113 ; 123), the tensioner module being configured to apply an adjustable force to the at least one transmission arm (110 ; 120), the applied adjustable force being adapted so that the cooperative engagement of the main wheel with the first lateral surface of the wire rope (1) is a direct contact and so that the cooperative engagement of the secondary wheel with the second lateral surface of the wire rope (1) is a direct contact.

2. The movable inspection device according to claim 1, wherein the adjustable force, when applied to the at least one transmission arm (110 ; 120), is adapted to:
- lead the transmission arm (110 ; 120) to pull the secondary wheel (113 ; 123) of each pair of drivable wheels (111, 113; 121, 123) toward the main wheel (111 ; 121) which is respective of said pair of drivable wheels (111, 113; 121, 123), and/or
- generate a pressure of the main wheel (111 ; 121) and of the secondary wheel (113 ; 123) of each pair of drivable wheels (111, 113; 121, 123) onto the wire rope, the pressure force being balanced by a counterforce exerted by the wire rope (1), the pressure being optionally adjustable by varying the stiffness of the tensioner module (140).

3. The movable inspection device according to any of claim 1 or 2, wherein the pair of drivable wheels (111, 113; 121, 123) consists of two pairs of drivable wheels (111, 113 ; 121, 123) which are arranged longitudinally along the direction of the wire rope (1), each pair being configured such that each main wheel (111 ; 121) and the secondary wheel (113 ; 123) respective of said main wheel are adapted to be in cooperative engagement with the wire rope (1).

4. The movable inspection device according to any of the preceding claims, wherein the at least one transmission arm (110; 120) comprises a transmission chain connecting the main wheel (111 ; 121) to the secondary wheel (113 ; 123) respective of said main wheel, said transmission chain including at least one element selected among a sprocket, a chain arrangement, a gear, or a belt.

5. The movable inspection device according to claim 4, wherein the transmission chain comprises an even number of gears, called transmission gear set, the actuation of the main wheel (111 ; 121) by the at least one motor (130) driving the transmission gear set, the transmission gear set being configured to transmit the torque from the main wheel (111 ; 121) to the secondary wheel (113 ; 123) respective of said main wheel.

6. The movable inspection device according to any of the preceding claims, wherein the transmission chain comprises a two-stage reduction gear train (150), the two-stage reduction gear train (150) including a belt and/or an odd number of gears, the two-stage reduction gear train being arranged such that the actuation of the main wheel (111 ; 121) by the at least one motor (130) transmits a reduced rotational speed through the two-stage reduction gear train (150).

7. The movable inspection device according to any of the preceding claims, wherein:
- the main wheel (111 ; 121) and/or the secondary wheel (113 ; 123) of the pair of drivable wheels has or have a diameter comprised between 80 mm and 120 mm, said diameter being preferably equal to 90 mm, and/or
- the secondary wheel (113 ; 123) of the pair of drivable wheels has a circumference which includes a respective groove, said respective groove having a shaped angle larger than 90° and smaller than 120°.

8. The movable inspection device according to any of the preceding claims, wherein the tensioner module (140) comprises one or more springs configured to apply the adjustable force.

9. The movable inspection device according to claim 8, wherein the one or more springs of the tensioner module (140) comprise(s) a threaded rod, the tensioner module (140) being configured to adjust the stiffness of the one or more springs by a tightening or a loosening of the threaded rod, the adjustment of the stiffness varying the magnitude of the adjustable force applicable by the tensioner module (140) to the at least one transmission arm (110; 120).

10. The movable inspection device according to claim 8 or 9, wherein the tensioner module (140) further comprises a dimensioning system configured to vary the magnitude of the adjustable force applicable by the tensioner module (140) to the at least one transmission arm (110 ; 120), the dimensioning system comprising an interface configured to input the magnitude of the adjustable force, the interface being selected among:
- a digital switch inputting the magnitude of the of the adjustable force depending on a diameter of the wire rope (1), the diameter of the wire rope being optionally selected among 18 mm, 30 mm, 45 mm or 58 mm, or
- an analog scale inputting the magnitude of the of the adjustable force as a continuous function of the rigidity of the one or more springs.

11. The movable inspection device according to any of claims 8 to 10, further comprising a pivotal articulation, wherein the main wheel (111; 121) and the secondary wheel (113 ; 123) of each pair of drivable wheels are each adapted to turn in a respective rotation plane, the rotation plane of the secondary wheel (113 ; 123) being pivotally movable relative to the rotation plane of the main wheel (111 ; 121) by said pivotal articulation to adapt to oblique irregularities of the wire rope (1), said pivotal articulation being configured to exert a pressure from the secondary wheel (113 ; 123) onto the wire rope (1) when in cooperative engagement for adapting the position of the secondary wheel (113 ; 123) to said oblique irregularities.

12. The movable inspection device according to claim 11, wherein the pivotal articulation is further configured to compensate a misalignment between the rotation plane of the main wheel (111 ; 121) and the rotation plane of the secondary wheel (113 ; 123), the pivotal articulation being pivotally connected to the chassis (100), to the respective secondary wheel (113; 123), and/or to the at least one transmission arm (110; 120), thereby enabling an even distribution of the exerted pressure.

13. The movable inspection device according to any of the preceding claims, further comprising an emitter/receiver system housed within the chassis (100), the emitter/receiver system being configured to transmit and receive electromagnetic control signals for remotely controlling the at least one motor (130).

14. Magnetic Rope Testing, MRT, system (1000) comprising:
- the movable inspection device (10) according to any of the preceding claims,
- an MRT unit (50) adapted to be connected to the movable inspection device (10), the MRT unit comprising a plurality of anchor points (51, 52) and a magnet configured to generate a magnetic force for steadily maintaining the unit system on the wire rope (1), and
- at least one adjustable rod (55) configured to connect the MRT unit (50) to the movable inspection device (10),
the at least one adjustable rod (55) and/or the plurality of anchor points (51, 52) being adapted for securing the movement of the MRT unit (50) along the wire rope (1) relative to the movable inspection device (10) when the MRT unit (50) is connected to the movable inspection device (10) with the at least one adjustable rod (55) and/or the plurality of anchor points (51, 52).

15. The MRT system (1000) according to claim 14, wherein the MRT unit (50) is connected to the movable inspection device (10) with the at least one adjustable rod (55) and/or with the plurality of anchor points (51, 52).
